Europäisches Patentamt

European Patent Office

Office européen des brevets

(11) Publication number: **0 242 360 B1**

# EUROPEAN PATENT SPECIFICATION

(45) Date of publication of patent specification: **29.04.92**   (51) Int. Cl.5: **A22C 25/16**, A22C 25/17

(21) Application number: **86900313.7**

(22) Date of filing: **03.12.85**

(86) International application number:
**PCT/SE85/00499**

(87) International publication number:
**WO 86/03376 (19.06.86 86/13)**

(54) **A FISH PROCESSING MACHINE.**

(30) Priority: **05.12.84 SE 8406159**

(43) Date of publication of application:
**28.10.87 Bulletin  87/44**

(45) Publication of the grant of the patent:
**29.04.92 Bulletin  92/18**

(84) Designated Contracting States:
**BE DE FR GB IT NL SE**

(56) References cited:
**GB-A- 2 089 642**
**NO-C- 143 187**
**SE-C- 395 342**
**SE-C- 395 343**

(73) Proprietor: **LINDH, Per Olof**
**Pl. 1084**
**S-430 65 Rävlanda(SE)**

Proprietor: **MARBERG, Christer**
**Pl. 2927**
**S-430 41 Kullavik(SE)**

(72) Inventor: **LINDH, Per-Olof**
**Pl. 1084**
**S-430 65 Rävlanda(SE)**

(74) Representative: **Roth, Ernst Adolf Michael et al**
**GÖTEBORGS PATENTBYRA AB Box 5005**
**S-402 21 Göteborg(SE)**

## Description

The present invention relates to a fish processing machine for production of skinned fillets of fish, particularly herring, and comprising two circular knives obliqely arranged at an acute angle relative to each other and so arranged relative to a first guiding rail located in front of said circular knives, that the beheaded and tail-less fish is slidingly conveyed upon its opened and gutted belly on said first guiding rail towards the area of the point of the angle of the circular knives, a second guiding rail being provided tangentially to and behind the circular knives of the filleting device and in connection to its angle point, said second guiding rail being situated at the extension of said first guiding rail and designed to guide the double fillet rid of bones and the spine and held together by the skin only.

## Background of the invention

Automatic fish processing machines for whitefish, i.e. codfish, haddock, ling and the like are earlier known, in which the major part of the fish processing procedure (except for the introduction of a fish in the machine and the decapitation thereof) up to the skin free fillet is made continuously without manual grips having to be made. Whitefish is characterized thereby that it is rather big and firm-fleshed and has a very thick skin. It therefore stands rather harsh treatment such as subjected to in a machine, which is described in Swedish patent specification 202.778, where the tail portion of the fish is squeezed between a V-belt and a V-belt pulley with the fish located transversly to the pulley. Along a portion of the circumference of the pulley there are arranged treatment stations through wich the fishis pulled with aid of guiding plates. A first station produces an incision from the belly side towards the spine, whereupon ploughs are arranged for spreading apart the flanks of the fish. A second set of knives is arranged for cutting away the gut membranes and bones whereupon follows a further knife station for detachment of the flank portions along the spine till in the proximity of the skin. A deskinning device of the type described hereabove is also connected to the circumference of the V-belt pulley. From earlier having been squeezed between the driving belt and the pulley, the double-fillet, which is still held together by the skin, subsequently shall be covered in the plane of the pulley by aid of guiding members. Even if it concerns whitefish, which has a very thick skin the filleting machine operates without any bigger difficulties, but the transfer from this machine member to the deskinning device is however problematic, as the device is not entirely reliable.

Fish having very thin skin, such as herring, will not stand the treatment caused them by these known filleting devices and if the herring furthermore is pretreated e.g. salted, seasoned or pickled it can not at all stand any rough treatment.

Machines are earlier known, which only has for purpose to deskin fish of some sort, whereby the filleted double fillet is placed manually upon a conveyer, which feeds the fish in correct position through the machine. The drawback with such a machine is however that it can not be connected to the filleting machine.

GB-A-2089642 which discloses the features discloses a fish filleting machine comprising two circular knives obliqely arranged at an acute angle relative to each other and so arranged relative to a first guiding rail located in front of said circular knives, that the beheaded and tail-less fish is slidingly conveyed upon its opened and gutted belly on said first guiding rail towards the area of the point of the angle of the circular knives, a second guiding rail being provided tangentially to and behind the circular knives of the filleting device and in connection to its angle point, said second guiding rail being situated at the extension of said first guiding rail and designed to guide the double fillet rid of bones and the spine and held together by the skin only.

Highly effective automatic filleting machines are known having a capacity which requires two deskinning machines, each being served by two persons. Since long it has been a desire to be able to effect the deskinning by means of automatic transfer from the filleting machine without manual work after the fish has been fed into the machine.

SE-A-395343 comprises a deskinning device which consists of rotatable pulleys equipped with grooves for an endless pliable member, e.g. a thin wire which conveys the fish up to one of the pulleys which cooperates with rotatable deskinning knives.

## Purpose and most essential features of the invention

The purpose of the present invention is to provide a fully automatic fish processing machine, which treats the fish so cautious that also fish having very thin skin, such as e.g. small herring can be filleted and deskinned in one continouos sequence. This task has been solved at a fish processing machine comprising two circular knives obliqely arranged at an acute angle relative to each other and so arranged relative to a first guiding rail located in front of said circular knives, that the beheaded and tail-less fish is slidingly conveyed upon its opened and gutted belly on said first guiding rail towards the area of the point of the angle of the circular knives, a second guiding rail being provided tangentially to and behind the circular knives of the filleting device and in connection to its angle point, said second guiding rail being situated at the extension of said first guiding rail and designed to guide the double fillet rid of bones and the spine and held together by the skin only, in that it comprises a deskinning device, which consists of rotatable pulleys equipped with grooves for an endless pliable member, e.g. a thin wire, which permits to convey the fish up to a second pulley which cooperates with rotatable deskinning knives, the first pulley forming part of said deskinning device being situated in extension of the second guiding rail of the filleting device, which second guiding rail at its rearmost end portion being shaped to close conformity with the circumferential portion of the first pulley, a third pulley being arranged between the first and the second pulleys and in the same vertical plane, and being situated close to the second pulley and arranged to give the pliable member, just before the second pulley, a change of direction in the same vertical plane, the fish processing machine further comprises two endless belts having mainly parallel portions for conveying the fish therebetween through the filleting device and arranged to extend to the said first pulley of the deskinning device, circular knives, and that there is arranged tangentially to and behind the circular knives of the filleting device a second guiding rail, situated at the extension of said first guiding rail and designed to guide the double fillet rid of the bones and spine and heled together by the skin only to the periphery of the first pulley when forms part of said deskinning device and is situated in the extension of the second guiding rail.

## Description of the drawings

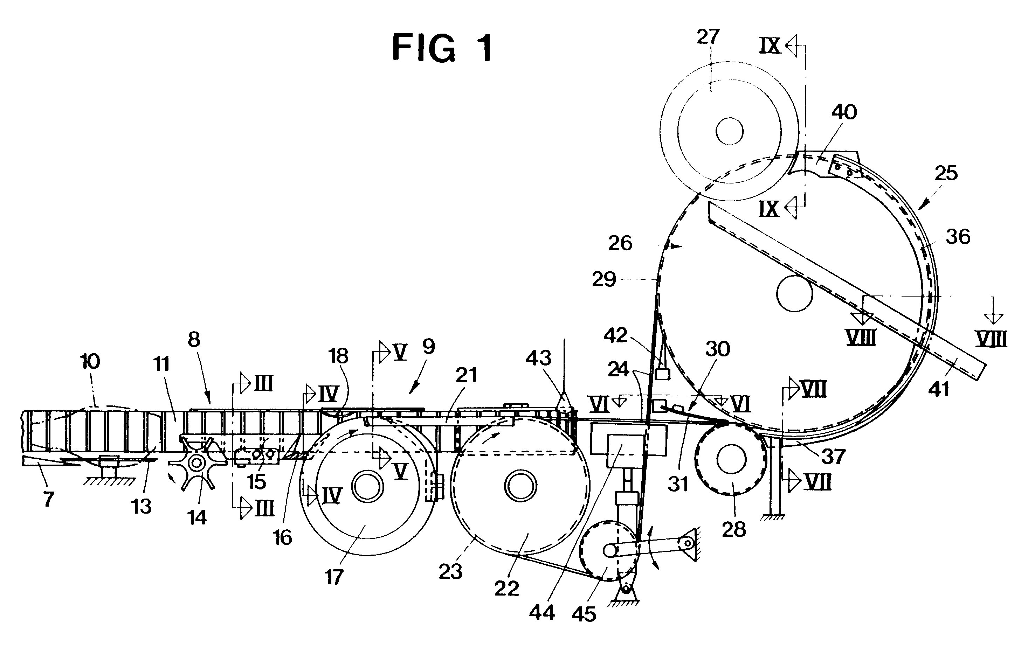

Fig. 1 shows very schematically and in side view a portion of the fish processing machine according to the invention.

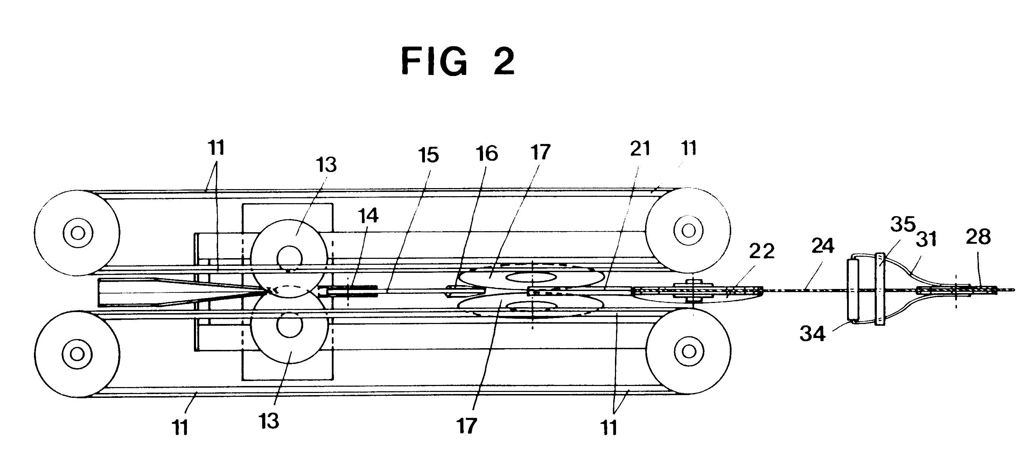

Fig. 2 shows the machine according to fig. 1 in a view from above.

Fig. 3 shows in bigger scale a section along line III-III in fig. 1 with a fish located therein, and which is guided against a filleting device.

Fig 4 shows a section along line IV-IV in fig. 1 with a fish placed therein during the filleting.

Fig. 5 shows a section along line V-V in fig. 1 with a fish placed therein and moving out from the filleting device.

Fig. 6 shows a view from above of a device for aligning the fish.

Fig. 7 shows a section along line VII-VII in fig. 1 with the double fillet of the fish taking care of by the deskinning device.

Fig. 8 shows a section along line VIII-VIII in fig. 1 with a fish on its way against the deskinning knives during the turning phase.

Fig. 9 is a section along line IX-IX in fig. 1, showing the fish during the very deskinning operation.

## Description of the embodiments

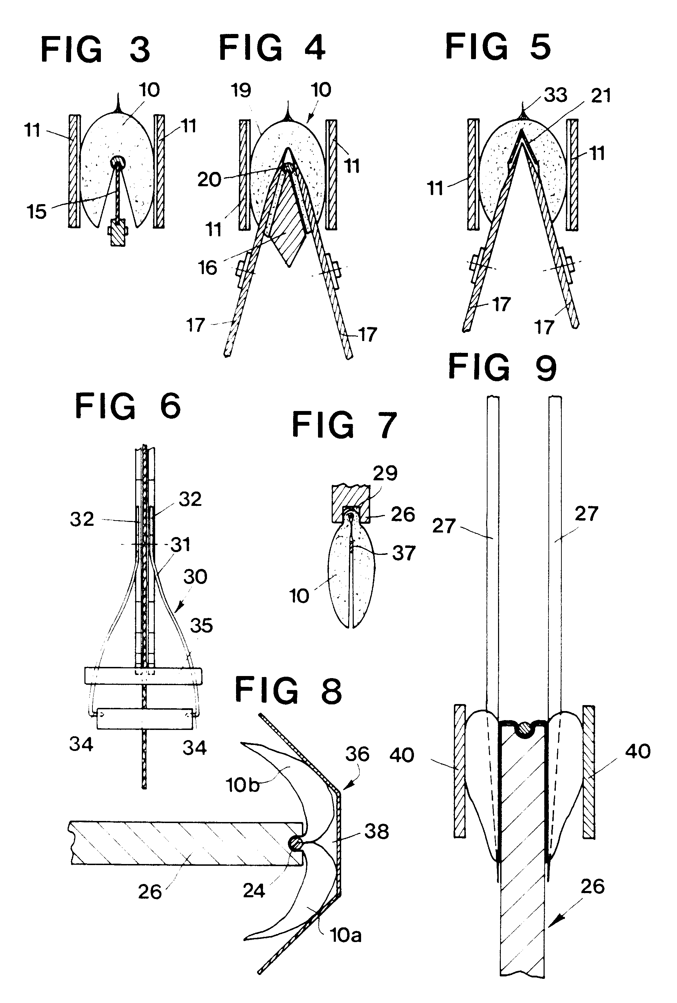

The fish processing machine according to the invention preferably consists of known, reliable designs in as far as these are available. The fish processing machine thus incorporates and not further shown feeding table, on which the fishes 10 are oriented manually or automatically thus that they are all located with the head and the belly in the same direction. In the first station, which is neither shown, the head and tail are cut off whereupon the fishes fall down into a feeding gutter 7 and are conveyed between two endless conveyor belts 11 with the belly turned downwards to a gutting station 8 incorporating two horizontally arranged somewhat overlapeing circular knives 13 , which cut off a slice of the belly of the fish, thus that a following rinsing wheel 14 can take away the guts. The endless conveyor belts 11 convey the fishes 10 further to a filleting device 9, whereby in the opened fish belly is introduced a guiding rail 15, the opposite end of which is designed with an enlarged portion 16 mainly conforming to the space between two oblique circular knives 17, hereinafter called the filleting knives, which as shown in fig. 4 cut out the spine of the fish and the portions of the belly where gut membranes and bones projecting from the spine are located. By aid of a pressing device 10 the pressure on the knives 17 can be adjusted whereby it is ascertained that the filleting knives will not cut through the skin 19 of the fish. The cutting away of the spine 20 and bones of the fish is brought about within the area where the filleting knives 17 form an acute angle against each other, and further defined in the very point of the angle. During the entire filleting procedure the fish is guided, at the front of the filleting knives 17 by means of said front guiding rail 15 and on the rear side of the fillet knives, where the fish now consists of a double fillet, the fillet portions of which are interconnected via the dorsal skin, by means of a rearward guiding rail 21. This is V-shaped in cross section and is arranged very near to the filleting knives 17, where these form said point of the angle. In order to facilitate the transfer of the double fillet to the rear most guiding rail 21 this is at its front end beveled.

The rearmost end of the guiding rail 21 is tangentially connected to a pulley 22 equipped with a circumferential groove 23 for an endless pliable member 24 arranged in a 8-shaped track, e.g. a very fine steel wire. The two endless conveyor belts 11 extend up to said pulleys 22, which means that the double fillet will be fed up to them. The V-shaped guiding rail 21 is formed in close contact to the circumferential portion of the pulley 22, thus that the double fillet will "ride straddled" upon the pulley and thereby also on the wire 24. The pulley 22 forms part of the deskinning device 25, the second bigger pulley of which in the 8-formed track is designated 26.

Of importance at the transfer of the double fillet to the big pulley 26 has hitherto been the exact guided feeding of the dorsal fin of the fish in relation to the rather shallow groove 29 in the circumference of the big pulley 26, wherein the wire 24 is located. As the size as well as the position of the dorsal fin of the fishes vary, and also the location of the double fillet upon the wire 24, the dorsal fin will urge the wire 24 out of the groove resulting in a break-down, if the fin is not exactly centered relative to the groove 29, or if it is so situated that it comes entirely outside the pulley. An exact guiding of the fin is howevere not possible, and the deskinning device 25 therefore must be so designed that it can tolerate deviations from the ideal feeding. This problem has been solved by aid of an additional pulley 28 provided in front of and very close to the big pulley 26 and which has for its primary purpose to prevent the wire from leaving the groove 29, even if it is exposed to a lateral force from the dorsal fin. The pulley 28 also assists in guiding the dorsal fin by giving the wire 24 a faint directional change in the plain of the pulleys 23,26,28, whereby is obtained that the dorsal fin of the fish is risen before the double fillet portion around the dorsal fin is squeezed between the wire 24 and the circumferential groove 29 of the big pulley 26. The guiding of the dorsal fin of the fish is effected by aid of a guiding device 30 consisting of a fork-like member 31, the fork teeth 32 of which are tapering and which catch the dorsal fin 33 when this projecting upwards thus that the dorsal fin will obtain its correct position in relation to the groove 29 of the big pulley 26. The guiding member 31 is pivotable about rearward shaft journals 34 and it is provided with a weight 35 which provides a certain pressure against the back of the fish.

As mentioned above the dorsal portion of the double fillet will be squeezed between the wire 24 and the pulley 26, which means that half the fillet will hang vertically downwards such as shown in fig. 7. About half of the circumference of the big pulley 26 is surrounded by a turning member 36, which at its lower end is formed by a vertically located guiding rail 37, which at higher level is shaped to a gutter 38, such as shown in fig. 8. The purpose of the gutter is to turn the fillet sides 10a and 10b of the double fillet thus that they at the upper part of the pulley 26 will be located with the skin side engaging the pulley 26. The two circular skinning knives 27 are arranged at such a short distance, one of each side of the pulley 26, which corresponds to the thickness of the skin such as shown in fig. 9. At the rearmost end of the gutter-shaped turning member 36 there are provided faintly elastic pressure members 40, which press the fillets 10a, 10b to engagement against the pulley 26. Below the deskinning knives 27 on both sides of the pulley 26, there is arranged a gutter 41 for the deskinned fillets, whereas on the down-moving portion of the wire 24 from the pulley 26 is arranged a scraping device 42 for the skin.

The deskinning device 25 is further provided with a wire tensioning device 45, and between the pulleys 22 and 28 and just above the wire 24 is provided a level sensor 43. If the double fillet has been located in a wrong manner upon the wire, this is sensed as an unpermissible level change and an ejecting device 44 is activated to throw out the double fillet from the wire.

The invention is not limited to the embodiment shown but a plurality of variations are possible within the scope of the appended claims. The inventive fish processing machine can also be used in a semi-automatic rinsing and filleting process for fish, which has been pretreated in an earlier stage and where only the filleting and deskinning shall take place.

**Claims**

1. A fish processing machine comprising a filleting device which consists of two circular knives (17) obliqely arranged at an acute angle relative to each other and so arranged relative to a first guiding rail (15) located in front of said circular knives, that the beheaded and tailless fish (10) is slidingly conveyed upon its opened and gutted belly on said first guiding rail (15) towards the area of the point of the angle of the circular knives, a second guiding rail (21) being provided tangentially to and behind the circular knives (17) of the filleting device (9) and in connection to its angle point, said second guiding rail (21) being situated at the extension of said first guiding rail (15) and designed to guide the double fillet rid of bones and the spine and held together by the skin only,

   **characterized in**,

   that for production of skinned fillets of fish, it comprises a deskinning device, which consists of rotatable pulleys (22,26,28) equipped with groove for an endless pliable member, e.g. a thin wire, which permits to convey the fish up to a second pulley (26) which cooperates with rotatable deskinning knives (27), the first pulley (22) forming part of said deskinning device being situated in extension of the second guiding rail (21) of the filleting device, which second guiding rail (21) at its rearmost end portion being shaped to close conformity with the circumferential portion of the first pulley (22), a third pulley (28) being arranged between the first and the second pulleys (22,26) and in the same vertical plane, and being situated close to the second pulley (26) and arranged to give the pliable member (24), just before the second pulley (24), a change of direction in the same vertical plane, the fish processing machine further comprising two endless belts (11) having mainly parallel portions for conveying the fish therebetween through the filleting device and arranged to extend to the said first pulley (22) of the deskinning device.

2. A fish processing machine as claimed in claim 1,
**characterized therein**,
that a fork-like guide member (30) is provided above the third pulley (28) and is designed to guide the dorsal fin (33) of the fishes (10) against the circumferential groove (29) of the second pulley (26).

**Revendications**

1. Machine de traitement de poisson comprenant un dispositif pour produire des filets et qui consiste en deux couteaux circulaires (17) qui sont disposés obliquement l'un par rapport à l'autre suivant un angle aigu et par rapport à un premier rail de guidage (15) prévu en face desdits couteaux circulaires de telle façon que le poisson sans tête ni queue soit amené par glissement, ouvert et vidé, par le premier rail de guidage (15) vers la zone du sommet de l'angle des couteaux circulaires, un deuxième rail de guidage (21) prévu tangentiellement et à l'arrière des couteaux circulaires (17) du dispositif pour produire des filets (9) et en liaison avec leur sommet d'angle, ledit deuxième rail de guidage (21) étant situé dans le prolongement dudit premier rail de guidage (15) et conçu pour guider le double filets dépourvu des arêtes et de l'arête dorsale et tenus ensemble par la peau seulement, caractérisée en ce que pour la production de filets de poisson dépouillés, elle comporte un dispositif d'enlèvement de peau qui consiste en des poulies rotatives (22, 26, 28) dotées de gorges pour un organe pliable sans fin, par exemple un fil fin, et qui permet d'amener le poisson jusqu'à une deuxième poulie (26) coopérant avec les couteaux (27) du dispositif d'enlèvement de peau rotatif, la première poulie (22), constituant une partie dudit dispositif d'enlèvement de peau, étant située dans le prolongement du second rail de guidage (21) du dispositif de production de filets, la partie d'extrémité arrière dudit second rail de guidage (21) étant de forme telle qu'elle soit en proche conformité avec la partie circonférentielle de la première poulie (22), une troisième poulie (28) étant disposée entre les première et deuxième poulies (22, 26), dans le même plan vertical et près de la deuxième poulie (26) de façon que l'organe pliable (24), juste avant la deuxième poulie (26), change de direction dans le même plan vertical, la machine de traitement de poisson comprenant en outre deux courroies sans fin (11) ayant des parties principales parallèles pour amener le poisson entre elles par l'intermédiaire du dispositif de production de filets et elles sont disposées de façon à aller jusqu'à la première poulie (22) du dispositif d'enlèvement de peau.

2. Machine de traitement de poisson selon la revendication 1, caractérisée en ce qu'un organe de guidage en forme de fourche (30) est prévu au-dessus de la troisième poulie (28) et il est conçu pour guider la nageoire dorsale (33) du poisson (10) contre la gorge circonférentielle (29) de la deuxième poulie (26).

**Patentansprüche**

1. Fischverarbeitungsmaschine mit einer Filetiervorrichtung, welche aus zwei Kreismessern (17) besteht, die unter einem spitzen Winkel relativ zueinander geneigt und relativ zu einer ersten Führungsschiene (15) vor den Kreismessern derart angeordnet sind, daß der kopf- und schwanzlose Fisch (10) auf seinem geöffneten und ausgenommenen Bauch auf der genannten ersten Führungsschiene (15) gleitend zu dem Bereich des Scheitelpunktes der Kreismesser gefördert wird, wobei eine zweite Führungsschiene (21) tangential zu und hinter den Kreismessern (17) der Filetiervorrichtung (9) und in Verbindung zu dem Scheitelpunkt vorgesehen, in der Verlängerung der ersten Führungsschiene (15) angeordnet und derart gestaltet ist, daß er das doppelte Filet führt, welches frei von Gräten und von der Rückengräte ist, und lediglich durch die Haut zusammengehalten ist, dadurch gekennzeichnet, daß zum Herstellen von enthäuteten Fischfilets die Vorrichtung eine Enthäutungsvorrichtung umfaßt, welche aus drehbaren Rollen (22, 26, 28) besteht, die mit Nuten für ein endloses, faltbares Organ, beispielsweise einen dünnen Draht, ausgestattet ist, was es ermöglicht, den Fisch zu einer zweiten Rolle (26) zu fördern, welche mit drehbaren Enthäutungsmessern (27) zusammenarbeitet, daß die erste Rolle (25) einen Teil der genannten Enthäutungsmaschine bildet und in der Verlängerung der zweiten Führungsschiene (21) der Filtetiervorrichtung angeordnet ist, daß die zweite Führungsschiene (21) an ihrem rückwärtigsten Endbereich in enger Übereinstimmung mit dem Umfangsbereich der ersten Rolle (22) gestaltet ist, daß eine dritte Rolle (28) zwischen der ersten und der zweiten Rolle (22, 26) sowie nahe bei der zweiten Rolle (26) vorgesehen und derart angeordnet ist, daß sie dem faltbaren Organ (24) gerade vor der zweiten Rolle (24) eine Richtungsänderung in derselben Vertikalebene verleiht, und daß die Fischverarbeitungsmaschine ferner zwei endlose Bänder (11) aufweist, die im wesentlichen parallele Bereiche aufweisen zum Fördern des Fisches zwischen sich durch die Filetiermaschine hindurch, und die derart angeordnet sind, daß sie sich bis zur ersten Rolle (22) der Enthäutungsmaschine hin erstrecken.

2. Fischverarbeitungsmaschine gemäß Anspruch 1, dadurch gekennzeichnet, daß ein gabelförmiges Führungselement (30) oberhalb der dritten Rolle (28) angeordnet und derart gestaltet ist, daß es die Rückenflosse (33) des Fisches (10) gegen die Umfangsnut (29) der zweiten Rolle (26) führt.

FIG 1

FIG 2

# FIG 3

# FIG 4

# FIG 5

# FIG 6

# FIG 7

# FIG 8

# FIG 9